# EUROPEAN PATENT SPECIFICATION

(11) **EP 3 185 632 B1**
(45) Date of publication and mention of the grant of the patent: **06.11.2019**
(21) Application number: 15839648.1
(22) Date of filing: 11.09.2015
(51) Int. Cl.: H04W 72/04, H04W 4/06, H04L 5/00, H04B 7/024

(54) **COMP JT COMMUNICATION METHOD AND BASE STATION**
COMP-JT-KOMMUNIKATIONSVERFAHREN UND BASISSTATION
PROCÉDÉ DE COMMUNICATION COMP JT ET STATION DE BASE

(30) Priority: 12.09.2014 CN 201410466513
(43) Date of publication of application: 28.06.2017
(73) Proprietor: Huawei Technologies Co., Ltd., Longgang District Shenzhen, Guangdong 518129 (CN)
(72) Inventor: GUAN, Lu, Shenzen Guangdong 518129 (CN); YI, Xiongshu, Shenzen Guangdong 518129 (CN)
(74) Representative: Goddar, Heinz J.
(86) International application number: PCT/CN2015/089401
(87) International publication number: WO 2016/037586

(56) References cited:
- WO-A1-2011/109544
- WO-A2-2014/072814
- CN-A- 101 938 295
- CN-A- 103 167 611
- CN-A- 103 428 723
- CN-A- 103 812 624
- CN-A- 104 244 419
- US-A1- 2014 036 806

## Description

### TECHNICAL FIELD

The present invention relates to the field of communications, and in particular, to a CoMP JT communication method and a base station.

### BACKGROUND

With development of communications technologies, a coordinated multipoint (CoMP, Coordinated multipoint) transmission technology is also becoming increasingly mature. The CoMP technology mainly refers to the following: Base stations of multiple cells that include a serving cell and a coordinated cell perform data reception or transmission in a coordinated manner, to improve received signal quality of user equipment (UE, User Equipment)/an evolved NodeB eNodeB, reduce inter-cell interference, and increase a cell-edge user throughput and a cell average throughput.

Specifically, the CoMP technology includes joint transmission (JT, Joint Transmission). CoMP JT communication is applicable to a cell-edge user, and can improve received signal quality of UE in a serving cell, or eliminate interference to another UE. In Long Term Evolution (LTE, Long Term Evolution) R10 and a later release, a base station uses a multimedia broadcast multicast service single frequency network (MBSFN, multimedia broadcast multimedia service single frequency network) subframe to transmit JT data, and UE transparently receives the JT data, thereby implementing CoMP JT communication.

However, UE of LTE R9 and an earlier release cannot use an MBSFN subframe to perform beamforming transmission, and further cannot transparently receive JT data transmitted on the MBSFN subframe. Therefore, in the prior art, the UE of LTE R9 and an earlier release cannot perform CoMP JT communication.
US 2014/036806 A1 discloses methods and apparatus for coordinated multipoint (CoMP) communications. It also discloses methods and apparatus for determining resource mapping and/or rate matching for CoMP operations.
WO 2014072814 A2 discloses a method for a serving base station of CoMP transmission. The method includes sending a message to a cooperating base station of the CoMP transmission to indicate desired non-zero-power channel status information reference signal (NZP CSI RS) resources and/or zero-power channel status information reference signal (ZP CSI RS) resources.

### SUMMARY

Embodiments of the present invention provide a CoMP JT communication method, used to implement CoMP JT communication in communication of LTE R9 and an earlier release.

A first aspect of the embodiments of the present invention provides a coordinated multipoint CoMP joint transmission JT communication method, including:
receiving, by a coordinated base station, coordination information from a serving base station;
configuring, by the coordinated base station, a JT coordinated subframe according to the coordination information, where the JT coordinated subframe is a normal type subframe, the JT coordinated subframe is used to: when user equipment UE in a serving cell needs to perform CoMP JT communication, send JT data of the UE in the serving cell together with a JT serving subframe configured by the serving base station, the serving base station is configured to provide a communication service for the user equipment UE in the serving cell, the JT serving subframe is a normal type subframe, and the JT serving subframe is used to send the JT data of the UE in the serving cell; and
when the UE in the serving cell needs to perform CoMP JT communication, sending, by the coordinated base station, the JT coordinated subframe to the UE in the serving cell to provide a CoMP JT communication service for the UE in the serving cell.

With reference to the first aspect of the embodiments of the present invention, in a first implementation manner of the first aspect of the embodiments of the present invention, the coordination information includes a control format indicator CFI of the serving cell, and the configuring, by the coordinated base station, a JT coordinated subframe according to the coordination information includes:
configuring, by the coordinated base station, the JT coordinated subframe according to the CFI, so that a symbol quantity of a physical downlink control channel PDCCH of the JT coordinated subframe is the same as that of the JT serving subframe, and in the JT coordinated subframe, a cell-specific reference signal CRS is configured only on the PDCCH.

With reference to the first implementation manner of the first aspect of the embodiments of the present invention, in a second implementation manner of the first aspect of the embodiments of the present invention, the coordination information further includes a cell identity of the serving cell, and the configuring, by the coordinated base station, a JT coordinated subframe according to the coordination information further includes:
determining, by the coordinated base station, a location of the CRS in the JT serving subframe according to the cell identity of the serving cell, and configuring the JT coordinated subframe, so that in the JT coordinated subframe, the JT data of the UE in the serving cell is configured at a location different from the location of the CRS in the JT serving subframe.

With reference to the first aspect, or the first implementation manner or the second implementation manner of the first aspect of the embodiments of the present invention, in a third implementation manner of the first aspect of the embodiments of the present invention, before the sending, by the coordinated base station, the JT coordinated subframe to the UE in the serving cell, the method further includes:
sending, by the coordinated base station, radio resource control RRC signaling to UE in a coordinated cell, where the RRC signaling is used to instruct the UE in the coordinated cell not to perform channel measurement on the JT coordinated subframe.

With reference to the third implementation manner of the first aspect of the embodiments of the present invention, in a fourth implementation manner of the first aspect of the embodiments of the present invention, the RRC signaling is specifically used to notify the UE in the coordinated cell that the JT coordinated subframe is a multimedia broadcast multicast service single frequency network MBSFN subframe.

A second aspect of the embodiments of the present invention provides a coordinated multipoint CoMP joint transmission JT communication method, including:
configuring, by a serving base station, a JT serving subframe, where the serving base station is configured to provide a communication service for user equipment UE in a serving cell, the JT serving subframe is a normal type subframe, and the JT serving subframe is used to send JT data of the UE in the serving cell;
sending, by the serving base station, coordination information to a coordinated base station, where the coordination information is used to instruct the coordinated base station to configure a JT coordinated subframe, the JT coordinated subframe is a normal type subframe, and the JT coordinated subframe is used to: when the UE in the serving cell needs to perform CoMP JT communication, send the JT data of the UE in the serving cell together with the JT serving subframe; and
when the UE in the serving cell needs to perform CoMP JT communication, sending, by the serving base station, the JT serving subframe to the UE in the serving cell to provide a CoMP JT communication service for the UE in the serving cell.

With reference to the second aspect of the embodiments of the present invention, in a first implementation manner of the second aspect of the embodiments of the present invention, the coordination information includes a control format indicator CFI of the serving cell, the CFI indicates a symbol quantity of a physical downlink control channel PDCCH of the JT serving subframe, and the coordination information is used to instruct the coordinated base station to configure the JT coordinated subframe according to the CFI, so that a symbol quantity of a PDCCH of the JT coordinated subframe is the same as that of the JT serving subframe, and in the JT coordinated subframe, a cell-specific reference signal CRS is configured only on the PDCCH.

With reference to the second aspect or the first implementation manner of the second aspect of the embodiments of the present invention, the coordination information includes a cell identity of the serving cell, and the coordination information is used to instruct the coordinated base station to determine a location of the CRS in the JT serving subframe according to the cell identity of the serving cell, and configure the JT coordinated subframe, so that in the JT coordinated subframe, the JT data of the UE in the serving cell is configured at a location different from the location of the CRS in the JT serving subframe.

A third aspect of the embodiments of the present invention provides a coordinated base station, including:
an information receiving module, configured to receive coordination information from a serving base station;
a second processing module, configured to configure a joint transmission JT coordinated subframe according to the coordination information, where the JT coordinated subframe is a normal type subframe, the JT coordinated subframe is used to: when UE in the serving cell needs to perform coordinated multipoint CoMP JT communication, send JT data of the user equipment UE in the serving cell together with a JT serving subframe configured by the serving base station, the serving base station is configured to provide a communication service for the user equipment UE in the serving cell, the JT serving subframe is a normal type subframe, and the JT serving subframe is used to send the JT data of the UE in the serving cell; and
a second communications module, configured to: when the UE in the serving cell needs to perform CoMP JT communication, send the JT coordinated subframe to the UE in the serving cell to provide a CoMP JT communication service for the UE in the serving cell.

With reference to the third aspect of the embodiments of the present invention, in a first implementation manner of the third aspect of the embodiments of the present invention, the coordination information includes a control format indicator CFI of the serving cell, and the second processing module is specifically configured to:
configure the JT coordinated subframe according to the CFI, so that a symbol quantity of a physical downlink control channel PDCCH of the JT coordinated subframe is the same as that of the JT serving subframe, and in the JT coordinated subframe, a cell-specific reference signal CRS is configured only on the PDCCH.

With reference to the first implementation manner of the third aspect of the embodiments of the present invention, in a second implementation manner of the third aspect of the embodiments of the present invention, the coordination information further includes a cell identity of the serving base station cell, and the second processing module is further configured to:
determine a location of the CRS in the JT serving subframe according to the cell identity of the serving cell, and configure the JT coordinated subframe, so that in the JT coordinated subframe, the JT data of the UE in the serving cell is configured at a location different from the location of the CRS in the JT serving subframe.

With reference to the third aspect, or the first implementation manner or the second implementation manner of the third aspect of the embodiments of the present invention, in a third implementation manner of the third aspect of the embodiments of the present invention, the coordinated base station further includes:
a signaling sending module, configured to send radio resource control RRC signaling to UE in a coordinated cell, where the RRC signaling is used to instruct the UE in the coordinated cell not to perform channel measurement on the JT coordinated subframe.

With reference to the third implementation manner of the third aspect of the embodiments of the present invention, in a fourth implementation manner of the third aspect of the embodiments of the present invention, the RRC signaling is specifically used to notify the UE in the coordinated cell that the JT coordinated subframe is a multimedia broadcast multicast service single frequency network MBSFN subframe.

A fourth aspect of the embodiments of the present invention provides a serving base station, where the serving base station is configured to provide a communication service for user equipment UE in a serving cell, and includes:
a first processing module, configured to configure a joint transmission JT serving subframe, where the JT serving subframe is a normal type subframe, and the JT serving subframe is used to send JT data of the UE in the serving cell;
an information sending module, configured to send coordination information to a coordinated base station, where the coordination information is used to instruct the coordinated base station to configure a JT coordinated subframe, the JT coordinated subframe is a normal type subframe, and the JT coordinated subframe is used to: when the UE in the serving cell needs to perform coordinated multipoint CoMP JT communication, send the JT data of the UE in the serving cell together with the JT serving subframe; and
a first communications module, configured to: when the UE in the serving cell needs to perform CoMP JT communication, send the JT serving subframe to the UE in the serving cell to provide a CoMP JT communication service for the UE in the serving cell.

With reference to the fourth aspect of the embodiments of the present invention, in a first implementation manner of the fourth aspect of the embodiments of the present invention, the coordination information includes a control format indicator CFI of the serving cell, the CFI indicates a symbol quantity of a physical downlink control channel PDCCH of the JT serving subframe, and the coordination information is used to instruct the coordinated base station to configure the JT coordinated subframe according to the CFI, so that a symbol quantity of a PDCCH of the JT coordinated subframe is the same as that of the JT serving subframe, and in the JT coordinated subframe, a cell-specific reference signal CRS is configured only on the PDCCH.

With reference to the fourth aspect or the first implementation manner of the fourth aspect of the embodiments of the present invention, in a second implementation manner of the fourth aspect of the embodiments of the present invention, the coordination information further includes a cell identity of the serving cell, and the coordination information is used to instruct the coordinated base station to determine a location of the CRS in the JT serving subframe according to the cell identity of the serving cell, and configure the JT coordinated subframe, so that in the JT coordinated subframe, the JT data of the UE in the serving cell is configured at a location different from the location of the CRS in the JT serving subframe.

The embodiments of the present invention provide the CoMP JT communication method, where a serving base station configures a normal type subframe as a JT serving subframe; the serving base station sends coordination information to a coordinated base station, so that the coordinated base station configures a JT coordinated subframe; and when UE in the serving cell needs to perform CoMP JT communication, the serving base station sends the JT serving subframe to the UE in the serving cell, and the JT coordinated subframe and the JT serving subframe send JT data of the UE in the serving cell together, to provide a CoMP JT communication service for the UE in the serving cell. By using this method, the serving base station can directly use a normal type subframe to perform CoMP JT communication, and therefore, UE of LTE R9 and an earlier release can also implement CoMP JT communication.

### BRIEF DESCRIPTION OF DRAWINGS

FIG. 1 is a flowchart of an embodiment of a CoMP JT communication method according to an embodiment of the present invention;
FIG. 2 is a flowchart of another embodiment of a CoMP JT communication method according to an embodiment of the present invention;
FIG. 3 is a structural diagram of an embodiment of a serving base station according to an embodiment of the present invention;
FIG. 4 is a structural diagram of another embodiment of a serving base station according to an embodiment of the present invention;
FIG. 5 is a structural diagram of an embodiment of a coordinated base station according to an embodiment of the present invention; and
FIG. 6 is a structural diagram of another embodiment of a coordinated base station according to an embodiment of the present invention.

### DESCRIPTION OF EMBODIMENTS

Embodiments of the present invention provide a CoMP JT communication method, used to implement CoMP JT communication in communication of LTE R9 and an earlier release. The embodiments of the present invention further provide a related base station, and description is separately provided in the following.

For ease of description and understanding, the following stipulations are particularly made in this application: In CoMP JT communication, a cell in which UE that receives JT data is located is referred to as a serving cell, and a cell that cooperates with the serving cell to provide a CoMP JT service for the UE is referred to as a coordinated cell. A serving base station is configured to provide a communication service for the UE in the serving cell, and a coordinated base station is configured to provide a communication service for UE in the coordinated cell. Preferably, the serving cell and the coordinated cell may be neighboring cells. It may be understood that, there may be one or more coordinated cells, that is, there may be one or more coordinated base stations. It may be understood that, the serving base station and the coordinated base station may be a same base station, or may be different base stations.

It should be understood that, technical solutions of the embodiments of the present invention may be applied to various wireless communications systems such as a Long Term Evolution (Long Term Evolution, "LTE" for short) system, a Long Term Evolution Advanced (Long Term Evolution Advanced, "LTE-A" for short) system, and a further evolved system, for example, an LTE frequency division duplex (Frequency Division Duplex, "FDD" for short) system, an LTE time division duplex (Time Division Duplex, "TDD" for short) wireless communications system, and the like.

It should be further understood that, in the embodiments of the present invention, user equipment (User Equipment, "UE" for short) may be referred to as a terminal (Terminal), a mobile station (Mobile Station, "MS" for short), a mobile terminal (Mobile Terminal), or the like. The UE may communicate with one or more core networks by using a radio access network (Radio Access Network, "RAN" for short). For example, the UE may be a mobile phone (or referred to as a "cellular" phone), a computer having a mobile terminal, or the like. For example, the UE may be a portable, pocket-sized, handheld, computer built-in, or vehicle-mounted mobile apparatus, which exchanges voice and/or data with the radio access network.

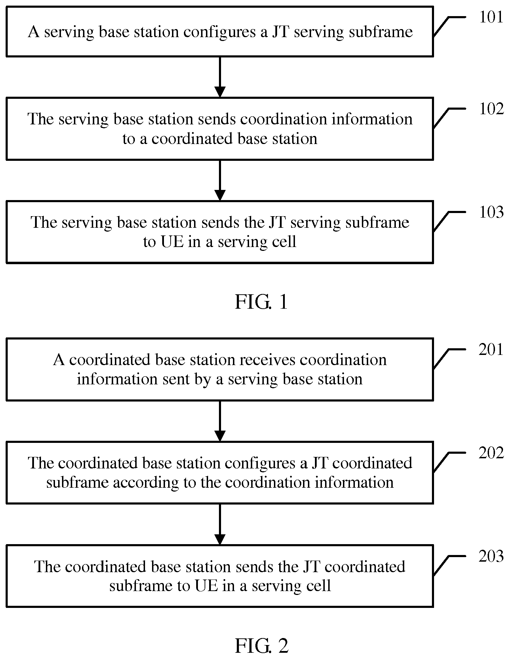

In the embodiments of the present invention, both the serving base station and the coordinated base station may be evolved NodeBs (Evolutional Node B, "eNB" for short) in LTE. First, the CoMP JT communication method provided in this application is described from a perspective of the serving base station. For a basic procedure of the CoMP JT communication method, refer to FIG. 1. The basic procedure mainly includes the following steps.

101. The serving base station configures a JT serving subframe.

Because UE of LTE R9 and an earlier release cannot transparently receive JT data sent on an MBSFN subframe, a normal type subframe is used in this embodiment of the present invention to schedule the JT data.

In this embodiment of the present invention, the normal type subframe has the most fundamental and the bottommost frame structure. The UE of LTE R9 and an earlier release can transparently receive data sent by using the normal type subframe.

The serving base station configures the normal type subframe as a JT serving subframe, and the JT serving subframe is used to send JT data of UE in a serving cell. In this embodiment of the present invention, the JT data refers to data used by the UE in the serving cell to perform CoMP JT communication.

102. The serving base station sends coordination information to the coordinated base station.

To implement CoMP JT communication in this embodiment, after configuring the JT serving subframe, the serving base station sends the coordination information to the coordinated base station, so that the coordinated base station configures a JT coordinated subframe. The coordination information is used to instruct the coordinated base station to configure the JT coordinated subframe. The JT coordinated subframe is a normal type subframe, and is used to: when the UE in the serving cell needs to perform CoMP JT communication, send the JT data of the UE in the serving cell together with the JT serving subframe.

103. The serving base station sends the JT serving subframe to UE in a serving cell.

When the UE in the serving cell needs to perform CoMP JT communication, the serving base station sends the JT serving subframe to the UE in the serving cell, to provide a CoMP JT communication service for the UE in the serving cell.

According to a function of the JT coordinated subframe, it may be understood that, in this step, when the UE in the serving cell needs to perform CoMP JT communication, the coordinated base station sends the JT coordinated subframe to the UE in the serving cell, so that the JT coordinated subframe and the JT serving subframe send the JT data of the UE in the serving cell together, to provide the CoMP JT communication service for the UE in the serving cell.

In this embodiment, a serving base station configures a normal type subframe as a JT serving subframe, and the serving base station sends coordination information to a coordinated base station, so that the coordinated base station configures a JT coordinated subframe. When UE in a serving cell needs to perform CoMP JT communication, the serving base station sends the JT serving subframe to the UE in the serving cell, and the JT coordinated subframe and the JT serving subframe send JT data of the UE in the serving cell together, to provide a CoMP JT communication service for the UE in the serving cell. By using this method, the serving base station can directly use a normal type subframe to perform CoMP JT communication, and therefore, UE of LTE R9 and an earlier release can also implement CoMP JT communication.

In this embodiment of the present invention, a normal subframe is used to schedule JT data. However, when a coordinated cell also directly uses a normal subframe to schedule JT data, problems of UE reception abnormality and cell-specific reference signal (CRS, Cell specific Reference Symbol) conflicting occur. A symbol quantity of a physical downlink control channel (PDCCH, Physical Downlink Control Channel) of a subframe that is used to schedule JT data and of a serving cell may be different from a symbol quantity of a physical downlink control channel of a subframe that is used to schedule JT data and of the coordinated cell, and the UE can identify only the symbol quantity of the PDCCH of the serving cell but cannot identify the symbol quantity of the PDCCH of the coordinated cell. Therefore, after receiving JT data from a base station of the coordinated cell, the UE may not correctly decode the JT data sent by the coordinated cell. In addition, in an existing LTE network, because CRS shifts CRS_shift of neighboring cells are configured as different values, a location that is of a subframe of the serving cell and used to transmit JT data may be used to configure the CRS in the coordinated cell, and cannot be used to send JT data. Even if transmit power of the CRS of the coordinated cell is lowered, and the JT data is sent by means of superposition, a severe CRS interference problem still occurs, which leads to unsatisfactory CoMP JT communication effects.

To resolve the foregoing problem, in this embodiment, the serving base station sends the coordination information to the coordinated base station. The coordination information may include a control format indicator (CFI, Control Format Indicator) of the serving base station. The CFI indicates a symbol quantity of a PDCCH of the JT serving subframe, so that the coordinated base station configures the JT coordinated subframe according to the CFI. A symbol quantity of a PDCCH of the JT coordinated subframe is the same as that of the JT serving subframe, and in the JT coordinated subframe, a CRS is configured only on the PDCCH. Because the symbol quantity of the PDCCH of the JT coordinated subframe is the same as that of the JT serving subframe, even if the UE in the serving cell cannot identify the symbol quantity of the PDCCH of the JT coordinated subframe, the UE in the serving cell can still correctly decode JT data in the JT coordinated subframe. In addition, in the JT coordinated subframe, the CRS is configured only on the PDCCH. Therefore, a location that is of a subframe of the serving cell and used to transmit JT data is definitely not used to configure the CRS in the coordinated cell. Therefore, the CRS interference problem does not exist, and the CoMP JT communication effects are improved.

More preferably, the coordination information may further include a cell identity (cell ID) of the serving cell. The coordinated base station determines a location of the CRS in the JT serving subframe according to the cell identity of the serving cell, and evades the location of the CRS in the JT serving subframe when configuring the JT coordinated subframe, so that in the JT coordinated subframe, the JT data of the UE in the serving cell is configured at a location different from the location of the CRS in the JT serving subframe. By using this method, a case in which the JT data cannot be received by the UE in the serving cell because the JT data is configured at a location same as the location of the CRS in the JT serving subframe is avoided in the JT coordinated subframe, so that the UE in the serving cell can receive more complete JT data. To implement CoMP JT communication, the coordination information may further include other parameters, so that the coordinated base station further completes JT coordinated subframe configuration and CoMP JT communication according to these parameters. Specifically, the coordination information may include a scramble ID (SCID, Scramble ID) and a demodulation reference signal (DMRS, Demodulation Reference Signal) ID that are of the UE. The coordinated base station can obtain an initial value of a DMRS sequence by using the SCID and the serving cell identity, or by using the DMRS ID. The coordination information may further include a resource location scheduled by a JT user, the coordination information may further include a modulation and coding scheme (MCS, Modulation Coding Scheme) of the UE in the serving cell, and the coordination information may further include a downlink transmit weighted value of the coordinated cell, which is used to instruct the coordinated base station to cooperate with the serving base station to perform CoMP JT communication in different manners. The coordination information may further include another parameter, which is not limited in this embodiment.

The foregoing embodiment describes the CoMP JT communication method in this application from the perspective of the serving base station. The following describes the CoMP JT communication method provided in this application from the perspective of the coordinated base station. Referring to FIG. 2, the CoMP JT communication method includes the following steps.

201. The coordinated base station receives coordination information from the serving base station.

The coordinated base station receives the coordination information from the serving base station. A function of the coordination information is almost the same as the content described in the first embodiment, and includes: when UE in a serving cell needs to perform CoMP JT communication, sending JT data of the UE in the serving cell together with a JT serving subframe configured by the serving base station.

202. The coordinated base station configures a JT coordinated subframe according to the coordination information.

After receiving the coordination information, the coordinated base station configures the JT coordinated subframe according to the coordination information. The JT coordinated subframe is a normal type subframe, and is used to: when the UE in the serving cell needs to perform CoMP JT communication, send the JT data of the UE in the serving cell together with the JT serving subframe configured by the serving base station.

203. The coordinated base station sends the JT coordinated subframe to UE in a serving cell.

When the UE in the serving cell needs to perform CoMP JT communication, the coordinated base station sends the JT coordinated subframe to the UE in the serving cell to provide a CoMP JT communication service for the UE in the serving cell.

According to a function of the JT coordinated subframe, it may be understood that, in this step, when the UE in the serving cell needs to perform CoMP JT communication, the serving base station also sends the JT serving subframe to the UE in the serving cell, so that the JT serving subframe and the JT coordinated subframe send the JT data of the UE in the serving cell together, to provide the CoMP JT communication service for the UE in the serving cell.

In this embodiment, a coordinated base station receives coordination information from a serving base station, and configures a JT coordinated subframe according to the coordination information. When UE in a serving cell needs to perform CoMP JT communication, the serving base station sends a JT serving subframe to the UE in the serving cell, and the coordinated base station sends the JT coordinated subframe to the UE in the serving cell. The JT serving subframe and the JT coordinated subframe send JT data of the UE in the serving cell together, to provide a CoMP JT communication service for the UE in the serving cell. By using this method, the coordinated base station can directly use a normal type subframe to perform CoMP JT communication, and therefore, UE of LTE R9 and an earlier release can also implement CoMP JT communication.

As mentioned in the first embodiment, when the coordinated cell directly uses the normal subframe to schedule the JT data, problems of UE reception abnormality and CRS conflicting occur. To resolve the foregoing problems, in this embodiment, the coordination information may include a CFI. The CFI indicates a symbol quantity of a PDCCH of the JT serving subframe. The coordinated base station configures the JT coordinated subframe according to the CFI, so that a symbol quantity of a PDCCH of the JT coordinated subframe is the same as that of the JT serving subframe, and in the JT coordinated subframe, a CRS is configured only on the PDCCH. Because the symbol quantity of the PDCCH of the JT coordinated subframe is the same as that of the JT serving subframe, even if the UE in the serving cell cannot identify the symbol quantity of the PDCCH of the JT coordinated subframe, the UE in the serving cell can still correctly decode JT data in the JT coordinated subframe. In addition, in the JT coordinated subframe, the CRS is configured only on the PDCCH. Therefore, a location that is of a subframe of the serving cell and used to transmit JT data is definitely not used to configure the CRS in the coordinated cell. Therefore, a CRS interference problem does not exist, and CoMP JT communication effects are improved.

More preferably, the coordination information may further include a cell identity of the serving cell. The coordinated base station determines a location of the CRS in the JT serving subframe according to the cell identity of the serving cell, and evades these locations of the CRS in the JT serving subframe when configuring the JT coordinated subframe, so that in the JT coordinated subframe, the JT data of the UE in the serving cell is configured at a location different from the location of the CRS in the JT serving subframe. By using this method, a case in which the JT data cannot be received by the UE in the serving cell because the JT data is configured at a location same as the location of the CRS in the JT serving subframe is avoided in the JT coordinated subframe, so that the UE in the serving cell can receive more complete JT data.

Because the JT coordinated subframe is used to provide the CoMP JT communication service for the UE in the serving cell, the JT coordinated subframe is redundant data for UE in the coordinated cell, and may affect subsequent measurement and filtering for the UE in the coordinated cell. Therefore, preferably, before sending the JT coordinated subframe to the UE in the serving cell, the coordinated base station may send radio resource control (RRC, Radio Resource Control) signaling to the UE in the coordinated cell, so that the UE in the coordinated cell does not perform channel measurement on the JT coordinated subframe. Therefore, the UE in the coordinated cell does not perform transparent reception in the JT coordinated subframe. Preferably, the RRC signaling may be used to notify the UE in the coordinated cell that the JT coordinated subframe is an MBSFN subframe.

To implement CoMP JT communication, the coordination information may further include other parameters, so that the coordinated base station further completes JT coordinated subframe configuration and CoMP JT communication according to these parameters. Specifically, the coordination information may include a scramble ID (SCID, Scramble ID) and a demodulation reference signal (DMRS, Demodulation Reference Signal) ID that are of the UE. The coordinated base station can obtain an initial value of a DMRS sequence by using the SCID and the serving cell identity, or by using the DMRS ID. The coordination information may further include a resource location scheduled by a JT user, the coordination information may further include a modulation and coding scheme (MCS, Modulation Coding Scheme) of the UE in the serving cell, and the coordination information may further include a downlink transmit weighted value of the coordinated cell, which is used to instruct the coordinated base station to cooperate with the serving base station to perform CoMP JT communication in different manners. The coordination information may further include another parameter, which is not limited in this embodiment.

The serving base station and the coordinated base station may exchange information with each other by using the following base station information exchange methods:
(1) If the serving base station and the coordinated base station are a same base station, and the serving cell and the coordinated cell are managed by a same baseband processing unit, the base station performs information exchange by using an intra-baseband processing unit communications manner.
(2) If the serving base station and the coordinated base station are a same base station, and the serving cell and the coordinated cell are managed by different baseband processing units, the base station performs information exchange by using an inter-baseband processing unit communications manner.
(3) If the serving base station and the coordinated base station are different base stations, the serving base station and the coordinated base station perform data communication by using an X2 interface, to implement information exchange.

That the serving base station sends the coordination information to the coordinated base station may be implemented by using the base station information exchange methods in (1) to (3).

Before CoMP JT communication is performed, the serving base station needs to notify the coordinated base station when to perform CoMP JT communication. The serving base station may also notify, by using the base station information exchange methods in (1) to (3), the coordinated base station when to perform CoMP JT communication.

Separately from the perspective of the serving base station and the perspective of the coordinated base station, the foregoing embodiments describe the CoMP JT communication method provided in the embodiments of the present invention. However, in actual application, a cell in which UE that receives a CoMP JT communication service is located is uncertain. Therefore, whether a cell is a serving cell or a coordinated cell, and whether a base station is a serving base station or a coordinated base station are not invariable. A cell in which UE receiving the CoMP JT communication service is located is a serving cell, and a base station that provides a service for the UE in the serving cell is a serving base station.

Specifically, when there are multiple base stations performing CoMP JT communication, the multiple base stations may query in turn whether their cells have UE that receives the CoMP JT communication service. If its cell has UE that receives the CoMP JT communication service, a base station is determined as a serving base station, and another base station as a coordinated base station.

In particular, when there are multiple base stations performing CoMP JT communication, whether there is UE that receives the CoMP JT communication service may not be determined, and each base station serves as a serving base station in turn.

Separately from the perspective of the serving base station and the perspective of the coordinated base station, the foregoing embodiments describe the CoMP JT communication method provided in the embodiments of the present invention, and describe how to determine the serving base station and the coordinated base station. The following uses a specific application scenario for description.

A base station A, a base station B, and a base station C query in turn whether their cells have UE that receives a CoMP JT communication service. At the current moment, the base station A queries and discovers that a cell in which the base station A is located has UE that receives the CoMP JT communication service, and the UE does not support an LTE R10 release but supports an LTE R9 release. Therefore, the base station A is determined as a serving base station, and the base station B and the base station C as coordinated base stations.

The base station A configures JT data on a normal subframe, and the subframe is referred to as a JT serving subframe. Then, the base station A sends coordination information to the base station B and the base station C. The coordination information includes CFI information of the base station A and a cell identity of the cell in which the base station A is located. The CFI information indicates that a symbol quantity of a PDCCH of the JT serving subframe configured by the base station A is 2.

The base station B and the base station C separately receive the coordination information from the base station A, and separately configure a coordinated subframe B and a coordinated subframe C according to the CFI and the cell identity in the coordination information. In the coordinated subframe B and the coordinated subframe C, a symbol quantity of a PDCCH is also 2. No CRS is configured at other locations, except a PDCCH location, in the subframe B and the subframe C. The base station B and the base station C obtain through calculation, according to the cell identity, a location of a CRS in the subframe of the cell in which A is located, and in the coordinated subframe B and the coordinated subframe C, avoid using these locations to carry the JT data.

The base station A uses the JT serving subframe, the base station B uses the coordinated subframe B, and the base station C uses the coordinated subframe C to perform CoMP JT communication.

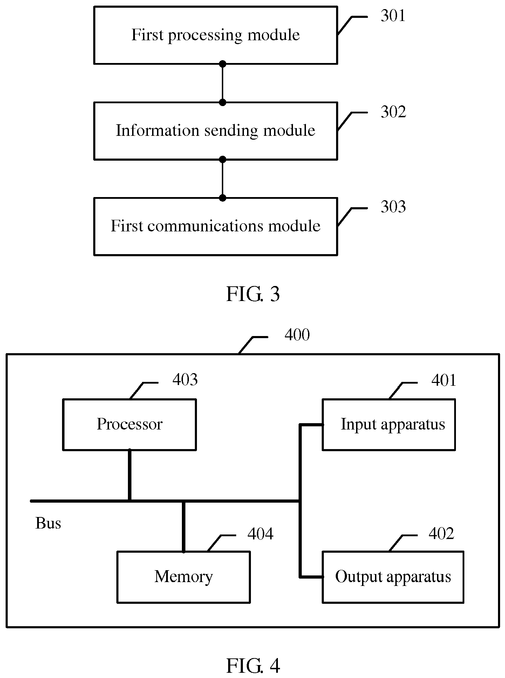

An embodiment of the present invention further provides a base station that can implement the foregoing method. This application first provides description from a perspective of a serving base station. Referring to FIG. 3, a main structure of the serving base station provided in this application includes:
a first processing module 301, configured to configure a JT serving subframe, where the JT serving subframe is a normal type subframe, and the JT serving subframe is used to send JT data of UE in a serving cell;
an information sending module 302, configured to send coordination information to a coordinated base station, so that the coordinated base station configures a JT coordinated subframe according to the coordination information, where the coordinated base station is configured to provide a communication service for UE in a coordinated cell, and provide a CoMP JT communication service for the UE in the serving cell together with the serving base station, the coordination information is used to instruct the coordinated base station to configure the JT coordinated subframe, the JT coordinated subframe is a normal type subframe, and the JT coordinated subframe is used to: when the UE in the serving cell needs to perform CoMP JT communication, send the JT data of the UE in the serving cell together with the JT serving subframe; and
a first communications module 303, configured to: when the UE in the serving cell needs to perform CoMP JT communication, send the JT serving subframe to the UE in the serving cell to provide the CoMP JT communication service for the UE in the serving cell.

In this embodiment, the first processing module 301 configures a normal type subframe as a JT serving subframe, and the information sending module 302 sends coordination information to a coordinated base station, so that the coordinated base station configures a JT coordinated subframe. When UE in a serving cell needs to perform CoMP JT communication, the first communications module 303 sends the JT serving subframe to the UE in the serving cell, and the JT coordinated subframe and the JT serving subframe send JT data of the UE in the serving cell together, to provide a CoMP JT communication service for the UE in the serving cell. In this way, the serving base station can directly use a normal type subframe to perform CoMP JT communication, and therefore, UE of LTE R9 and an earlier release can also implement CoMP JT communication.

Specifically, the information sending module 302 may be configured to send the coordination information to the coordinated base station. The coordination information includes a CFI of the serving cell, so that the coordinated base station configures the JT coordinated subframe according to the CFI. A symbol quantity of a PDCCH of the JT coordinated subframe is the same as that of the JT serving subframe, and in the JT coordinated subframe, a CRS is configured only on the PDCCH.

Preferably, the information sending module 302 may be further configured to send the coordination information to the coordinated base station. The coordination information includes a cell identity of the serving cell, so that the coordinated base station determines a location of the CRS in the JT serving subframe according to the cell identity of the serving cell, and configures the JT coordinated subframe, so that in the JT coordinated subframe, the JT data of the UE in the serving cell is configured at a location different from the location of the CRS in the JT serving subframe.

The foregoing describes the serving base station in this embodiment of the present invention from a perspective of a unit functional entity, and the following describes the serving base station in this embodiment of the present invention from a perspective of hardware processing. Referring to FIG. 4, another embodiment of a serving base station 400 in this embodiment of the present invention includes:
an input apparatus 401, an output apparatus 402, a processor 403, and a memory 404 (the serving base station 400 may have one or more processors 403, and one processor 403 is used as an example in FIG. 4), where in some embodiments of the present invention, the input apparatus 401, the output apparatus 402, the processor 403, and the memory 404 may be connected by using a bus or in another manner, and a bus connection is used as an example in FIG. 4.

By invoking an operation instruction stored in the memory 404, the processor 403 is configured to perform the following steps: configuring a JT serving subframe; sending coordination information to a coordinated base station; and sending the JT serving subframe to UE in a serving cell.

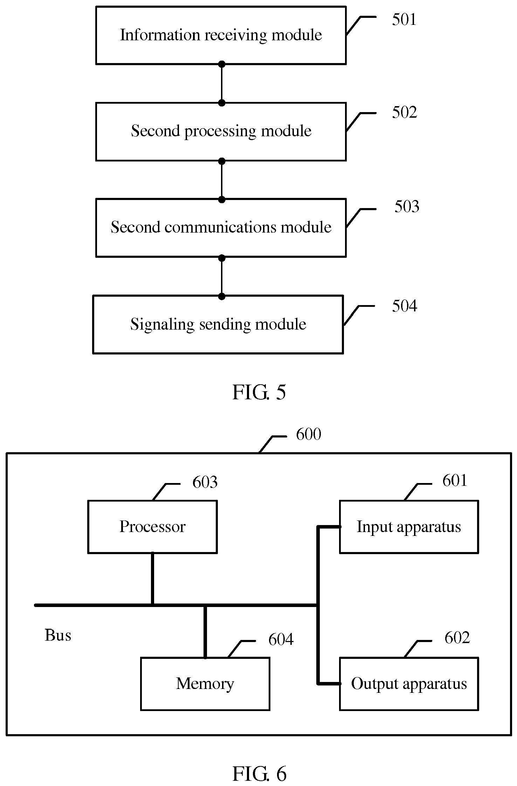

The embodiments in FIG. 3 and FIG. 4 are described from the perspective of the serving base station, and the following provides description from a perspective of a coordinated base station. Referring to FIG. 5, a main structure of the coordinated base station provided in this application includes:
an information receiving module 501, configured to receive coordination information from a serving base station;
a second processing module 502, configured to configure a JT coordinated subframe according to the coordination information, where the JT coordinated subframe is a normal type subframe, and is used to: when UE in a serving cell needs to perform CoMP JT communication, send JT data of the UE in the serving cell together with a JT serving subframe configured by the serving base station; and
a second communications module 503, configured to: when the UE in the serving cell needs to perform CoMP JT communication, send the JT coordinated subframe to the UE in the serving cell to provide a CoMP JT communication service for the UE in the serving cell.

In this embodiment, the information receiving module 501 receives coordination information from a serving base station, and the second processing module 502 configures a JT coordinated subframe according to the coordination information. When UE in a serving cell needs to perform CoMP JT communication, the serving base station sends a JT serving subframe to the UE in the serving cell, and the second communications module 503 of the coordinated base station sends the JT coordinated subframe to the UE in the serving cell. The JT serving subframe and the JT coordinated subframe send JT data of the UE in the serving cell together, to provide a CoMP JT communication service for the UE in the serving cell. The coordinated base station provided in this embodiment can directly use a normal type subframe to perform CoMP JT communication, and therefore, UE of LTE R9 and an earlier release can also implement CoMP JT communication.

Specifically, the coordination information in this embodiment may include a CFI of the serving cell. The second processing module 502 may configure the JT coordinated subframe according to the CFI, so that a symbol quantity of a PDCCH of the JT coordinated subframe is the same as that of the JT serving subframe, and in the JT coordinated subframe, a CRS is configured only on the PDCCH.

More specifically, the coordination information in this embodiment may include a cell identity of the serving base station cell, the second processing module 502 may be further configured to: determine a location of the CRS in the JT serving subframe according to the cell identity of the serving cell, and configure the JT coordinated subframe, so that in the JT coordinated subframe, the JT data of the UE in the serving cell is configured at a location different from the location of the CRS in the JT serving subframe.

Preferably, the coordinated base station may further include a signaling sending module 504, configured to send RRC signaling to UE in a coordinated cell, so that the UE in the coordinated cell does not perform channel measurement on the JT coordinated subframe. Specifically, the RRC signaling may be used to notify the UE in the coordinated cell that the JT coordinated subframe is an MBSFN subframe.

The foregoing describes the coordinated base station in this embodiment of the present invention from a perspective of a unit functional entity, and the following describes the coordinated base station in this embodiment of the present invention from a perspective of hardware processing. Referring to FIG. 6, another embodiment of a coordinated base station 600 in this embodiment of the present invention includes:
an input apparatus 601, an output apparatus 602, a processor 603, and a memory 604 (the coordinated base station 600 may have one or more processors 603, and one processor 603 is used as an example in FIG. 6), where in some embodiments of the present invention, the input apparatus 601, the output apparatus 602, the processor 603, and the memory 604 may be connected by using a bus or in another manner, and a bus connection is used as an example in FIG. 6.

By invoking an operation instruction stored in the memory 604, the processor 603 is configured to perform the following steps: receiving coordination information from a serving base station; configuring a JT coordinated subframe according to the coordination information; sending the JT coordinated subframe to UE in a serving cell; and sending RRC signaling to UE served by the coordinated base station, so that UE in a coordinated cell does not perform channel measurement on the JT coordinated subframe.

The foregoing embodiments and instances separately describe, from the perspective of the serving base station and the coordinated base station, the base stations provided in the embodiments of the present invention. However, in actual application, a cell in which UE that receives a CoMP JT communication service is located is uncertain. Therefore, whether a cell is a serving cell or a coordinated cell, and whether a base station is a serving base station or a coordinated base station are not invariable. A cell in which UE that receives the CoMP JT communication service is located is a serving cell, and a base station of the cell is a serving base station. Therefore, a base station of a cell may include a first processing module, an information sending module, and a first communications module of a serving base station, but also may include an information receiving module, a second processing module, a second communications module, and a signaling sending module of a coordinated base station.

The following uses a specific application scenario as an example to describe the base stations provided in the embodiments of the present invention.

A base station A, a base station B, and a base station C query in turn whether their cells have UE that receives a CoMP JT communication service. At the current moment, the base station A queries and discovers that a cell in which the base station A is located has UE that receives the CoMP JT communication service, and the UE does not support an LTE R10 release but supports an LTE R9 release. Therefore, the base station A is determined as a serving base station, and the base station B and the base station C as coordinated base stations.

A first processing module 301 of the base station A configures JT data on a normal subframe, where the subframe is referred to as a JT serving subframe. Then, an information sending module 302 of the base station A sends coordination information to the base station B and the base station C, where the coordination information includes CFI information of the base station A and a cell identity of the cell in which the base station A is located. The CFI information indicates that a symbol quantity of a PDCCH of the JT serving subframe configured by the base station A is 2.

The base station B and the base station C separately receive the coordination information from the information sending module 302, and respectively configure a coordinated subframe B and a coordinated subframe C according to the CFI and the cell identity in the coordination information. In the coordinated subframe B and the coordinated subframe C, a symbol quantity of a PDCCH is also 2. No CRS is configured at other locations, except a PDCCH location, in the subframe B and the subframe C. The base station B and the base station C obtain through calculation, according to the cell identity, a location of a CRS in the subframe of the cell in which A is located, and in the coordinated subframe B and the coordinated subframe C, avoid using these locations to carry the JT data.

A first communications module 303 of the base station A uses the JT serving subframe, the base station B uses the coordinated subframe B, and the base station C uses the coordinated subframe C, to perform CoMP JT communication.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A coordinated multipoint, CoMP, joint transmission, JT, communication method, comprising:
receiving (201), by a coordinated base station, coordination information from a serving base station; wherein the serving base station is configured to provide a communication service for a UE in a serving cell,
**characterized by**
configuring (202), by the coordinated base station, a JT coordinated subframe according to the coordination information, wherein the JT coordinated subframe is a normal type subframe, the JT coordinated subframe is used to send JT data of the UE in the serving cell together with a JT serving subframe configured by the serving base station, the JT serving subframe is a normal type subframe; and
when the UE in the serving cell needs to perform CoMP JT communication, sending (203), by the coordinated base station, the JT coordinated subframe to the UE in the serving cell to provide a CoMP JT communication service for the UE in the serving cell.

2. The CoMP JT communication method according to claim 1, wherein the coordination information comprises a control format indicator, CFI, of the serving cell, and the configuring, by the coordinated base station, a JT coordinated subframe according to the coordination information comprises:
configuring, by the coordinated base station, the JT coordinated subframe according to the CFI, so that a symbol quantity of a physical downlink control channel, PDCCH, of the JT coordinated subframe is the same as that of the JT serving subframe, and in the JT coordinated subframe, a cell-specific reference signal, CRS, is configured only on the PDCCH.

3. The CoMP JT communication method according to claim 2, wherein the coordination information further comprises a cell identity of the serving cell, and the configuring, by the coordinated base station, a JT coordinated subframe according to the coordination information further comprises:
determining, by the coordinated base station, a location of the CRS in the JT serving subframe according to the cell identity of the serving cell, and configuring the JT coordinated subframe, so that in the JT coordinated subframe, the JT data of the UE in the serving cell is configured at a location different from the location of the CRS in the JT serving subframe.

4. The CoMP JT communication method according to any one of claims 1 to 3, wherein before the sending, by the coordinated base station, the JT coordinated subframe to the UE in the serving cell, the method further comprises:
sending, by the coordinated base station, radio resource control, RRC, signaling to UE in a coordinated cell, wherein the RRC signaling is used to instruct the UE in the coordinated cell not to perform channel measurement on the JT coordinated subframe.

5. The CoMP JT communication method according to claim 4, wherein the RRC signaling is specifically used to notify the UE in the coordinated cell that the JT coordinated subframe is a multimedia broadcast multicast service single frequency network, MBSFN, subframe.

6. A coordinated multipoint, CoMP, joint transmission, JT, communication method, comprising:
configuring (101), by a serving base station, a JT serving subframe, wherein the serving base station is configured to provide a communication service for user equipment, UE, in a serving cell;
sending (102), by the serving base station, coordination information to a coordinated base station,; and
when the UE in the serving cell needs to perform CoMP JT communication, sending (103), by the serving base station, the JT serving subframe to the UE in the serving cell to provide a CoMP JT communication service for the UE in the serving cell;
**characterized in that** the JT serving subframe is a normal type subframe and the JT serving subframe is used to send JT data of the UE in the serving cell;
wherein the coordination information is used to instruct the coordinated base station to configure a JT coordinated subframe, the JT coordinated subframe is a normal type subframe, and the JT coordinated subframe is used to: when the UE in the serving cell needs to perform CoMP JT communication, send the JT data of the UE in the serving cell together with the JT serving subframe.

7. The CoMP JT communication method according to claim 6, wherein the coordination information comprises a control format indicator, CFI, of the serving cell, the CFI indicates a symbol quantity of a physical downlink control channel, PDCCH, of the JT serving subframe, and the coordination information is used to instruct the coordinated base station to configure the JT coordinated subframe according to the CFI, so that a symbol quantity of a PDCCH of the JT coordinated subframe is the same as that of the JT serving subframe, and in the JT coordinated subframe, a cell-specific reference signal, CRS, is configured only on the PDCCH.

8. The CoMP JT communication method according to claim 6 or 7, wherein the coordination information comprises a cell identity of the serving cell, and the coordination information is used to instruct the coordinated base station to determine a location of the CRS in the JT serving subframe according to the cell identity of the serving cell, and configure the JT coordinated subframe, so that in the JT coordinated subframe, the JT data of the UE in the serving cell is configured at a location different from the location of the CRS in the JT serving subframe.

9. A coordinated base station, comprising:
an information receiving module (501), configured to receive coordination information from a serving base station; wherein the serving base station is configured to provide a communication service for a user equipment, UE, in a serving cell;
**characterized in that** the coordinated base station further comprises:
a second processing module (502), configured to configure a joint transmission, JT, coordinated subframe according to the coordination information, wherein the JT coordinated subframe is a normal type subframe, the JT coordinated subframe is used to, send JT data of the UE in the serving cell together with a JT serving subframe configured by the serving base station, the JT serving subframe is a normal type subframe, and the JT serving subframe is used to send the JT data of the UE in the serving cell; and
a second communications module (503), configured to: when the UE in the serving cell needs to perform coordinated multipoint, CoMP, JT communication, send the JT coordinated subframe to the UE in the serving cell to provide a CoMP JT communication service for the UE in the serving cell.

10. The coordinated base station according to claim 9, wherein the coordination information comprises a control format indicator CFI of the serving cell, and the second processing module is specifically configured to:
configure the JT coordinated subframe according to the CFI, so that a symbol quantity of a physical downlink control channel, PDCCH, of the JT coordinated subframe is the same as that of the JT serving subframe, and in the JT coordinated subframe, a cell-specific reference signal, CRS, is configured only on the PDCCH.

11. The coordinated base station according to claim 10, wherein the coordination information further comprises a cell identity of the serving cell, and the second processing module is further configured to:
determine a location of the CRS in the JT serving subframe according to the cell identity of the serving cell, and configure the JT coordinated subframe, so that in the JT coordinated subframe, the JT data of the UE in the serving cell is configured at a location different from the location of the CRS in the JT serving subframe.

12. The coordinated base station according to any one of claims 9 to 11, wherein the coordinated base station further comprises:
a signaling sending module (504), configured to send radio resource control, RRC, signaling to UE in a coordinated cell, wherein the RRC signaling is used to instruct the UE in the coordinated cell not to perform channel measurement on the JT coordinated subframe.

13. The coordinated base station according to claim 12, wherein the RRC signaling is specifically used to notify the UE in the coordinated cell that the JT coordinated subframe is a multimedia broadcast multicast service single frequency network, MBSFN, subframe.

14. A serving base station, wherein the serving base station is configured to provide a communication service for user equipment, UE, in a serving cell and comprises:
a first processing module (301), configured to configure a joint transmission, JT, serving subframe;
an information sending module (302), configured to send coordination information to a coordinated base station; and
a first communications module (303), configured to: when the UE in the serving cell needs to perform coordinated multipoint, CoMP, JT communication, send the JT serving subframe to the UE in the serving cell to provide a CoMP JT communication service for the UE in the serving cell;
**characterized in that** the JT serving subframe is a normal type subframe, and the JT serving subframe is used to send JT data of the UE in the serving cell;
wherein the coordination information is used to instruct the coordinated base station to configure a JT coordinated subframe, the JT coordinated subframe is a normal type subframe, and the JT coordinated subframe is used to: when the UE in the serving cell needs to perform CoMP JT communication, send the JT data of the UE in the serving cell together with the JT serving subframe.

15. The serving base station according to claim 14, wherein the coordination information comprises a control format indicator, CFI, of the serving cell, the CFI indicates a symbol quantity of a physical downlink control channel, PDCCH, of the JT serving subframe, and the coordination information is used to instruct the coordinated base station to configure the JT coordinated subframe according to the CFI, so that a symbol quantity of a PDCCH of the JT coordinated subframe is the same as that of the JT serving subframe, and in the JT coordinated subframe, a cell-specific reference signal, CRS, is configured only on the PDCCH.

## Patentansprüche

1. Koordiniertes Multipoint (CoMP) "Joint Transmission" (JT)-Kommunikationsverfahren, das Folgendes umfasst:
Empfangen (201), durch eine koordinierte Basisstation, von Koordinationsinformationen von einer bedienenden Basisstation; wobei die bedienende Basisstation dazu ausgelegt ist, einen Kommunikationsdienst für ein UE in einer bedienenden Zelle bereitzustellen,
**gekennzeichnet durch**
Konfigurieren (202), durch die koordinierte Basisstation, eines JT-koordinierten Subrahmens gemäß den Koordinationsinformationen, wobei der JT-koordinierte Subrahmen ein Subrahmen des normalen Typs ist, der JT-koordinierte Subrahmen verwendet wird, um JT-Daten des UE in der bedienenden Zelle zusammen mit einem JT-bedienenden Subrahmen zu senden, der durch die bedienende Basisstation konfiguriert ist, der JT-bedienende Subrahmen ein Subrahmen des normalen Typs ist; und
wenn das UE in der bedienenden Zelle CoMP JT-Kommunikation durchführen muss, Senden (203), durch die koordinierte Basisstation, des JT-koordinierten Subrahmens zu dem UE in der bedienenden Zelle, um einen CoMP JT-Kommunikationsdienst für das UE in der bedienenden Zelle bereitzustellen.

2. CoMP JT-Kommunikationsverfahren gemäß Anspruch 1, wobei die Koordinationsinformationen einen Steuerformatindikator (CFI) der bedienenden Zelle umfassen, und das Konfigurieren, durch die koordinierte Basisstation, eines JT-koordinierten Subrahmens gemäß den Koordinationsinformationen Folgendes umfasst:
Konfigurieren, durch die koordinierte Basisstation, des JT-koordinierten Subrahmens gemäß dem CFI, so dass eine Symbolmenge eines physikalischen Downlink-Steuerkanals (PDCCH) des JT-koordinierten Subrahmens die gleiche wie die des JT-bedienenden Subrahmens ist, und in dem JT-koordinierten Subrahmen ein zellenspezifisches Referenzsignal (CRS) nur auf dem PDCCH konfiguriert ist.

3. CoMP JT-Kommunikationsverfahren gemäß Anspruch 2, wobei die Koordinationsinformationen ferner eine Zellenidentität der bedienenden Zelle umfassen, und das Konfigurieren, durch die koordinierte Basisstation, eines JT-koordinierten Subrahmens gemäß den Koordinationsinformationen Folgendes umfasst:
Bestimmen, durch die koordinierte Basisstation, einer Position des CRS in dem JT-bedienenden Subrahmen gemäß der Zellenidentität der bedienenden Zelle, und Konfigurieren des JT-koordinierten Subrahmens, so dass in dem JT-koordinierten Subrahmen die JT-Daten des UE in der bedienenden Zelle an einer Position konfiguriert werden, die sich von der Position des CRS in dem JT-bedienenden Subrahmen unterscheidet.

4. CoMP JT-Kommunikationsverfahren gemäß einem der Ansprüche 1 bis 3, wobei das Verfahren vor dem Senden, durch die koordinierte Basisstation, des JT-koordinierten Subrahmens an das UE in der bedienenden Zelle, ferner Folgendes umfasst:
Senden, durch die koordinierte Basisstation, von Funkressourcensteuerungs (RRC)-Signalisierung, die dem UE in einer koordinierten Zelle signalisiert, wobei die RRC-Signalisierung verwendet wird, um das UE in der koordinierten Zelle anzuweisen, keine Kanalmessung an dem JT-koordinierten Subrahmen durchzuführen.

5. CoMP JT-Kommunikationsverfahren gemäß Anspruch 4, wobei die RRC-Signalisierung speziell verwendet wird, um das UE in der koordinierten Zelle zu benachrichtigen, dass der JT-koordinierte Subrahmen ein "Multimedia Broadcast Multicast Service Single Frequency Network" (MBSFN)-Subrahmen ist.

6. Koordiniertes Multipoint (CoMP) "Joint Transmission" (JT)-Kommunikationsverfahren, das Folgendes umfasst:
Konfigurieren (101), durch eine bedienende Basisstation, eines JT-bedienenden Subrahmens, wobei die bedienende Basisstation dazu ausgelegt ist, einen Kommunikationsdienst für ein Benutzergerät (UE) in einer bedienenden Zelle bereitzustellen;
Senden (102), durch die bedienende Basisstation, von Koordinationsinformationen zu einer koordinierten Basisstation, und;
wenn das UE in der bedienenden Zelle CoMP JT-Kommunikation durchführen muss, Senden (103), durch die bedienende Basisstation, des JT-koordinierten Subrahmens zu dem UE in der bedienenden Zelle, um einen CoMP JT-Kommunikationsdienst für das UE in der bedienenden Zelle bereitzustellen;
**dadurch gekennzeichnet, dass** der JT-bedienende Subrahmen ein Subrahmen des normalen Typs ist und der JT-bedienende Subrahmen verwendet wird, um JT-Daten des UE in der bedienenden Zelle zu senden;
wobei die Koordinationsinformationen verwendet werden, um die koordinierte Basisstation anzuweisen, einen JT-koordinierten Subrahmen zu konfigurieren, der JT-koordinierte Subrahmen ein Subrahmen des normalen Typs ist, und der JT-koordinierte Subrahmen für Folgendes verwendet wird: wenn das UE in der bedienenden Zelle CoMP JT-Kommunikation durchführen muss, die JT-Daten des UE in der bedienenden Zelle zusammen mit dem JT-bedienenden Subrahmen zu senden.

7. CoMP JT-Kommunikationsverfahren gemäß Anspruch 6, wobei die Koordinationsinformationen einen Steuerformatindikator (CFI) der bedienenden Zelle umfassen, der CFI eine Symbolmenge eines physikalischen Downlink-Steuerkanals (PDCCH) des JT-bedienenden Subrahmens angibt, und die Koordinationsinformationen verwendet werden, um die koordinierte Basisstation anzuweisen, den JT-koordinierten Subrahmen gemäß dem CFI zu konfigurieren, so dass eine Symbolmenge eines PDCCH des JT-koordinierten Subrahmens die gleiche wie die des JT-bedienenden Subrahmens ist, und in dem JT-koordinierten Subrahmen ein zellenspezifisches Referenzsignal (CRS) nur auf dem PDCCH konfiguriert wird.

8. CoMP JT-Kommunikationsverfahren gemäß Anspruch 6 oder 7, wobei die Koordinationsinformationen eine Zellenidentität der bedienenden Zelle umfassen und die Koordinationsinformationen verwendet werden, um die koordinierte Basisstation anzuweisen, eine Position des CRS in dem JT-bedienenden Subrahmen gemäß der Zellenidentität der bedienenden Zelle zu bestimmen und den JT-koordinierten Subrahmen zu konfigurieren, so dass in dem JT-koordinierten Subrahmen die JT-Daten des UE in der bedienenden Zelle an einer Position konfiguriert werden, die sich von der Position des CRS in dem JT-bedienenden Subrahmen unterscheidet.

9. Koordinierte Basisstation, die Folgendes umfasst:
ein Informationsempfangsmodul (501), das dazu ausgelegt ist, Koordinationsinformationen von einer bedienenden Basisstation zu empfangen; wobei die bedienende Basisstation dazu ausgelegt ist, einen Kommunikationsdienst für ein Benutzergerät (UE) in einer bedienenden Zelle bereitzustellen;
**dadurch gekennzeichnet, dass** die koordinierte Basisstation ferner Folgendes umfasst:
ein zweites Verarbeitungsmodul (502), das dazu ausgelegt ist, einen "Joint Transmisson" (JT)-koordinierten Subrahmen gemäß den Koordinationsinformationen zu konfigurieren, wobei der JT-koordinierte Subrahmen ein Subrahmen des normalen Typs ist, der JT-koordinierte Subrahmen verwendet wird, um JT-Daten des UE in der bedienenden Zelle zusammen mit einem JT-bedienenden Subrahmen zu senden, der durch die bedienende Basisstation konfiguriert ist, der JT-bedienende Subrahmen ein Subrahmen des normalen Typs ist, und der JT-bedienende Subrahmen verwendet wird, um die JT-Daten des UE in der bedienenden Zelle zu senden; und
ein zweites Kommunikationsmodul (503), das für Folgendes ausgelegt ist: wenn das UE in der bedienenden Zelle koordinierte Multipoint (CoMP) JT-Kommunikation durchführen muss, den JT-koordinierten Subrahmen zu dem UE in der bedienenden Zelle zu senden, um einen CoMP JT-Kommunikationsdienst für das UE in der bedienenden Zelle bereitzustellen.

10. Koordinierte Basisstation gemäß Anspruch 9, wobei die Koordinationsinformationen einen Steuerformatindikator (CFI) der bedienenden Zelle umfassen, und das zweite Verarbeitungsmodul speziell für Folgendes ausgelegt ist:
Konfigurieren des JT-koordinierten Subrahmens gemäß dem CFI, so dass eine Symbolmenge eines physikalischen Downlink-Steuerkanals (PDCCH) des JT-koordinierten Subrahmens die gleiche wie die des JT-bedienenden Subrahmens ist, und in dem JT-koordinierten Subrahmen ein zellenspezifisches Referenzsignal (CRS) nur auf dem PDCCH konfiguriert ist.

11. Koordinierte Basisstation gemäß Anspruch 10, wobei die Koordinationsinformationen ferner eine Zellenidentität der bedienenden Zelle umfassen, und das zweite Verarbeitungsmodul ferner für Folgendes ausgelegt ist:
Bestimmen einer Position des CRS in dem JT-bedienenden Subrahmen gemäß der Zellenidentität der bedienenden Zelle, und Konfigurieren des JT-koordinierten Subrahmens, so dass in dem JT-koordinierten Subrahmen die JT-Daten des UE in der bedienenden Zelle an einer Position konfiguriert werden, die sich von der Position des CRS in dem JT-bedienenden Subrahmen unterscheidet.

12. Koordinierte Basisstation gemäß einem der Ansprüche 9 bis 11, wobei die koordinierte Basisstation ferner Folgendes umfasst:
ein Signalisierungs-Sendemodul (504), das dazu ausgelegt ist, Funkressourcensteuerungs (RRC)-Signalisierung an das UE in einer koordinierten Zelle zu senden, wobei die RRC-Signalisierung verwendet wird, um das UE in der koordinierten Zelle anzuweisen, keine Kanalmessung an dem JT-koordinierten Subrahmen durchzuführen.

13. Koordinierte Basisstation gemäß Anspruch 12, wobei die RRC-Signalisierung speziell verwendet wird, um das UE in der koordinierten Zelle zu benachrichtigen, dass der JT-koordinierte Subrahmen ein "Multimedia Broadcast Multicast Service Single Frequency Network" (MBSFN)-Subrahmen ist.

14. Bedienende Basisstation, wobei die bedienende Basisstation dazu ausgelegt ist, einen Kommunikationsdienst für ein Benutzergerät (UE) in einer bedienenden Zelle bereitzustellen und Folgendes umfasst:
ein erstes Verarbeitungsmodul (301), das dazu ausgelegt ist, einen "Joint Transmission" (JT) bedienenden Subrahmen zu konfigurieren;
ein Informations-Sendemodul (302), das dazu ausgelegt ist, Koordinationsinformationen zu einer koordinierten Basisstation zu senden; und
ein erstes Kommunikationsmodul (303), das für Folgendes ausgelegt ist: wenn das UE in der bedienenden Zelle koordinierte Multipoint (CoMP) JT-Kommunikation durchführen muss, den JT-bedienenden Subrahmen zu dem UE in der bedienenden Zelle zu senden, um einen CoMP JT-Kommunikationsdienst für das UE in der bedienenden Zelle bereitzustellen;
**dadurch gekennzeichnet, dass** der JT-bedienende Subrahmen ein Subrahmen des normalen Typs ist und der JT-bedienende Subrahmen verwendet wird, um JT-Daten des UE in der bedienenden Zelle zu senden;
wobei die Koordinationsinformationen verwendet werden, um die koordinierte Basisstation anzuweisen, einen JT-koordinierten Subrahmen zu konfigurieren, der JT-koordinierte Subrahmen ein Subrahmen des normalen Typs ist, und der JT-koordinierte Subrahmen für Folgendes verwendet wird: wenn das UE in der bedienenden Zelle CoMP JT-Kommunikation durchführen muss, die JT-Daten des UE in der bedienenden Zelle zusammen mit dem JT-bedienenden Subrahmen zu senden.

15. Bedienende Basisstation gemäß Anspruch 14, wobei die Koordinationsinformationen einen Steuerformatindikator (CFI) der bedienenden Zelle umfassen, der CFI eine Symbolmenge eines physikalischen Downlink-Steuerkanals (PDCCH) des JT-bedienenden Subrahmens angibt, und die Koordinationsinformationen verwendet werden, um die koordinierte Basisstation anzuweisen, den JT-koordinierten Subrahmen gemäß dem CFI zu konfigurieren, so dass eine Symbolmenge eines PDCCH des JT-koordinierten Subrahmens die gleiche wie die des JT-bedienenden Subrahmens ist, und in dem JT-koordinierten Subrahmen ein zellenspezifisches Referenzsignal (CRS) nur auf dem PDCCH konfiguriert wird.

## Revendications

1. Procédé de communication de transmission conjointe, JT, multipoint coordonnée, CoMP, comprenant de :
recevoir (201), par une station de base coordonnée, des informations de coordination à partir d'une station de base de desserte ; dans lequel la station de base de desserte est configurée pour fournir un service de communication pour un UE dans une cellule de desserte,
**caractérisé par** le fait de
configurer (202), par la station de base coordonnée, une sous-trame coordonnée JT conformément aux informations de coordination, dans lequel la sous-trame coordonnée JT est une sous-trame de type normal, la sous-trame coordonnée JT est utilisée pour envoyer des données JT de l'UE dans la cellule de desserte conjointement avec une sous-trame de desserte JT configurée par la station de base de desserte, la sous-trame de desserte JT est une sous-trame de type normal ; et
lorsque l'UE dans la cellule de desserte doit effectuer une communication JT CoMP, envoyer (203) par la station de base coordonnée, la sous-trame coordonnée JT à l'UE dans la cellule de desserte pour fournir un service de communication JT CoMP pour l'UE dans la cellule de desserte.

2. Procédé de communication JT CoMP selon la revendication 1, dans lequel les informations de coordination comprennent un indicateur de format de commande, CFI, de la cellule de desserte, et la configuration, par la station de base coordonnée, d'une sous-trame coordonnée JT en fonction des informations de coordination comprend de :
configurer, par la station de base coordonnée, la sous-trame coordonnée JT conformément au CFI, de sorte qu'une quantité de symboles d'un canal de commande physique de liaison descendante, PDCCH, de la sous-trame coordonnée JT soit identique à celle de la sous-trame de desserte JT, et que dans la sous-trame coordonnée JT, un signal de référence spécifique à la cellule, CRS, soit configuré uniquement sur le PDCCH.

3. Procédé de communication JT CoMP selon la revendication 2, dans lequel les informations de coordination comprennent en outre une identité de cellule de la cellule de desserte, et la configuration, par la station de base coordonnée, d'une sous-trame coordonnée JT en fonction des informations de coordination comprend en outre de :
déterminer, par la station de base coordonnée, un emplacement du CRS dans la sous-trame de desserte JT en fonction de l'identité de cellule de la cellule de desserte, et configurer la sous-trame coordonnée JT de sorte que, dans la sous-trame coordonnée JT, les données JT de l'UE dans la cellule de desserte soient configurées à un emplacement différent de l'emplacement du CRS dans la sous-trame de desserte JT.

4. Procédé de communication JT CoMP selon l'une quelconque des revendications 1 à 3, avant l'envoi, par la station de base coordonnée, de la sous-trame coordonnée JT à l'UE dans la cellule de desserte, le procédé comprenant en outre de :
envoyer, par la station de base coordonnée, une signalisation de commande des ressources radio, RRC, à l'UE dans une cellule coordonnée, dans lequel la signalisation RRC est utilisée pour ordonner à l'UE dans la cellule coordonnée de ne pas effectuer de mesure de canal sur la sous-trame coordonnée JT.

5. Procédé de communication JT CoMP selon la revendication 4, dans lequel la signalisation RRC est spécifiquement utilisée pour notifier à l'UE dans la cellule coordonnée que la sous-trame coordonnée JT est une sous-trame de réseau monofréquence de service de radiodiffusion multimédia multidestinataire, MBSFN.

6. Procédé de communication de transmission conjointe, JT, multipoint coordonnée, CoMP, comprenant de :
configurer (101), par une station de base de desserte, une sous-trame de desserte JT, dans lequel la station de base de desserte est configurée pour fournir un service de communication pour un équipement d'utilisateur, UE, dans une cellule de desserte ;
envoyer (102), par la station de base de desserte, des informations de coordination à une station de base coordonnée ; et
lorsque l'UE dans la cellule de desserte doit effectuer une communication JT CoMP, envoyer (103) par la station de base de desserte, la sous-trame de desserte JT à l'UE dans la cellule de desserte pour fournir un service de communication JT CoMP pour l'UE dans la cellule de desserte ;
**caractérisé en ce que** la sous-trame de desserte JT est une sous-trame de type normal et la sous-trame de desserte JT est utilisée pour envoyer des données JT de l'UE dans la cellule de desserte ;
dans lequel les informations de coordination sont utilisées pour ordonner à la station de base coordonnée de configurer une sous-trame coordonnée JT, la sous-trame coordonnée JT est une sous-trame de type normal, et la sous-trame coordonnée JT est utilisée pour : lorsque l'UE dans la cellule de desserte doit effectuer une communication JT CoMP, envoyer les données JT de l'UE dans la cellule de desserte conjointement avec la sous-trame de desserte JT.

7. Procédé de communication JT CoMP selon la revendication 6, dans lequel les informations de coordination comprennent un indicateur de format de commande, CFI, de la cellule de desserte, le CFI indique une quantité de symboles d'un canal de commande physique de liaison descendante, PDCCH, de la sous-trame de desserte JT, et les informations de coordination sont utilisées pour ordonner à la station de base coordonnée de configurer la sous-trame coordonnée JT conformément au CFI, de sorte qu'une quantité de symboles d'un PDCCH de la sous-trame coordonnée JT soit identique à celle de la sous-trame de desserte JT, et que dans la sous-trame coordonnée JT, un signal de référence spécifique à la cellule, CRS, soit configuré uniquement sur le PDCCH.

8. Procédé de communication JT CoMP selon la revendication 6 ou 7, dans lequel les informations de coordination comprennent une identité de cellule de la cellule de desserte, et les informations de coordination sont utilisées pour ordonner à la station de base coordonnée de déterminer un emplacement du CRS dans la sous-trame de desserte JT en fonction de l'identité de cellule de la cellule de desserte, et configurer la sous-trame coordonnée JT, de sorte que, dans la sous-trame coordonnée JT, les données JT de l'UE dans la cellule de desserte soient configurées à un emplacement différent de l'emplacement du CRS dans la sous-trame de desserte JT.

9. Station de base coordonnée comprenant :
un module de réception d'informations (501), configuré pour recevoir des informations de coordination à partir d'une station de base de desserte ; la station de base de desserte étant configurée pour fournir un service de communication pour un équipement d'utilisateur, UE, dans une cellule de desserte,
**caractérisée en ce que** la station de base coordonnée comprend en outre :
un second module de traitement (502), configuré pour configurer une sous-trame coordonnée de transmission conjointe, JT, conformément aux informations de coordination, dans laquelle la sous-trame coordonnée JT est une sous-trame de type normal, la sous-trame coordonnée JT est utilisée pour envoyer des données JT de l'UE dans la cellule de desserte conjointement avec une sous-trame de desserte JT configurée par la station de base de desserte, la sous-trame de desserte JT est une sous-trame de type normal, et la sous-trame de desserte JT est utilisée pour envoyer les données JT de l'UE dans la cellule de desserte ; et
un second module de communication (503), configuré pour : lorsque l'UE dans la cellule de desserte doit effectuer une communication JT multipoint coordonnée, CoMP, envoyer la sous-trame coordonnée JT à l'UE dans la cellule de desserte afin de fournir un service de communication JT CoMP pour l'UE dans la cellule de desserte.

10. Station de base coordonnée selon la revendication 9, dans laquelle les informations de coordination comprennent un indicateur de format de commande, CFI, de la cellule de desserte, et le second module de traitement est spécifiquement configuré pour :
configurer la sous-trame coordonnée JT conformément au CFI, de sorte qu'une quantité de symboles d'un canal de commande physique de liaison descendante, PDCCH, de la sous-trame coordonnée JT soit identique à celle de la sous-trame de desserte JT, et que dans la sous-trame coordonnée JT, un signal de référence spécifique à la cellule, CRS, soit configuré uniquement sur le PDCCH.

11. Station de base coordonnée selon la revendication 10, dans laquelle les informations de coordination comprennent en outre une identité de cellule de la cellule de desserte, et le second module de traitement est en outre configuré pour :
déterminer un emplacement du CRS dans la sous-trame de desserte JT en fonction de l'identité de cellule de la cellule de desserte, et configurer la sous-trame coordonnée JT de sorte que, dans la sous-trame coordonnée JT, les données JT de l'UE dans la cellule de desserte soient configurées à un emplacement différent de l'emplacement du CRS dans la sous-trame de desserte JT.

12. Station de base coordonnée selon l'une quelconque des revendications 9 à 11, la station de base coordonnée comprenant en outre :
un module d'envoi de signalisation (504), configuré pour envoyer une signalisation de commande des ressources radio, RRC, à l'UE dans une cellule coordonnée, dans laquelle la signalisation RRC est utilisée pour ordonner à l'UE dans la cellule coordonnée de ne pas effectuer de mesure de canal sur la sous-trame coordonnée JT.

13. Station de base coordonnée selon la revendication 12, dans laquelle la signalisation RRC est spécifiquement utilisée pour notifier à l'UE dans la cellule coordonnée que la sous-trame coordonnée JT est une sous-trame de réseau monofréquence de service de radiodiffusion multimédia multidestinataire, MBSFN.

14. Station de base de desserte, la station de base de desserte étant configurée pour fournir un service de communication pour un équipement d'utilisateur, UE, dans une cellule de desserte et comprenant :
un premier module de traitement (301), configuré pour configurer une sous-trame de desserte de transmission conjointe, JT ;
un module d'envoi d'informations (302), configuré pour envoyer des informations de coordination à une station de base coordonnée ; et
un premier module de communication (303), configuré pour : lorsque l'UE dans la cellule de desserte doit effectuer une communication JT multipoint coordonnée, CoMP, envoyer la sous-trame de desserte JT à l'UE dans la cellule de desserte afin de fournir un service de communication JT CoMP pour l'UE dans la cellule de desserte ;
**caractérisée en ce que** la sous-trame de desserte JT est une sous-trame de type normal et la sous-trame de desserte JT est utilisée pour envoyer des données JT de l'UE dans la cellule de desserte ;
dans laquelle les informations de coordination sont utilisées pour ordonner à la station de base coordonnée de configurer une sous-trame coordonnée JT, la sous-trame coordonnée JT est une sous-trame de type normal, et la sous-trame coordonnée JT est utilisée pour : lorsque l'UE dans la cellule de desserte doit effectuer une communication JT CoMP, envoyer les données JT de l'UE dans la cellule de desserte conjointement avec la sous-trame de desserte JT.

15. Station de base de desserte selon la revendication 14, dans laquelle les informations de coordination comprennent un indicateur de format de commande, CFI, de la cellule de desserte, le CFI indique une quantité de symboles d'un canal de commande physique de liaison descendante, PDCCH, de la sous-trame de desserte JT, et les informations de coordination sont utilisées pour ordonner à la station de base coordonnée de configurer la sous-trame coordonnée JT conformément au CFI, de sorte qu'une quantité de symboles d'un PDCCH de la sous-trame coordonnée JT soit identique à celle de la sous-trame de desserte JT, et que dans la sous-trame coordonnée JT, un signal de référence spécifique à la cellule, CRS, soit configuré uniquement sur le PDCCH.
